# NEUE EUROPÄISCHE PATENTSCHRIFT

(11) **EP 1 749 341 B2**
(45) Veröffentlichungstag und Bekanntmachung des Hinweises auf die Entscheidung über den Einspruch: **01.07.2020**
(45) Hinweis auf die Patenterteilung: 24.06.2009
(21) Anmeldenummer: 05734875.7
(22) Anmeldetag: 29.04.2005
(51) Int. Cl.: B66F 9/07, H02P 5/46, B65G 1/04, B60M 3/06

(54) **REGALLAGERSYSTEM MIT ENERGIERÜCKKOPPLUNG**
SHELF STORAGE SYSTEM WITH ENERGY RECYCLING
SYSTEME DE STOCKAGE A RAYONNAGES A REINJECTION D'ENERGIE

(30) Priorität: 28.05.2004 AT 9352004
(43) Veröffentlichungstag der Anmeldung: 07.02.2007
(73) Patentinhaber: KNAPP LOGISTIK AUTOMATION GMBH., 8075 Hart bei Graz (AT)
(72) Erfinder: FREUDELSPERGER, Karl, A-8075 Hart bei Graz (AT)
(74) Vertreter: Margotti, Herwig Franz
(86) Internationale Anmeldenummer: PCT/AT2005/000148
(87) Internationale Veröffentlichungsnummer: WO 2005/117248

(56) Entgegenhaltungen:
- EP-A- 1 061 035
- DE-A1- 10 234 150
- DE-A1- 19 831 204
- US-A- 5 814 956
- US-A1- 2001 048 277
- PATENT ABSTRACTS OF JAPAN Bd. 2000, Nr. 15, 6. April 2001 (2001-04-06) & JP 2000 355405 A (NIPPON YUSOKI CO LTD), 26. Dezember 2000 (2000-12-26)
- PATENT ABSTRACTS OF JAPAN Bd. 2000, Nr. 26, 1. Juli 2002 (2002-07-01) -& JP 2001 261246 A (FUJITEC CO LTD; FURUKAWA BATTERY CO LTD:THE), 26. September 2001 (2001-09-26)
- PATENT ABSTRACTS OF JAPAN Bd. 015, Nr. 438 (E-1130), 8. November 1991 (1991-11-08) -& JP 03 183389 A (TOSHIBA CORP), 9. August 1991 (1991-08-09)

## Beschreibung

Die Erfindung betrifft ein Regallagersystem mit zumindest zwei Regaleinheiten, wobei jede Regaleinheit ein eigenes verfahrbares Regalbediengerät mit elektrischen Antriebsmotoren aufweist, und mit einem elektrischen Energieversorgungskreis, um die Regaleinheiten mit elektrischer Energie zu versorgen.

Ein solches Regallagersystem mit zumindest zwei Regaleinheiten ist beispielsweise aus der DE 102 34 150 A1 bekannt.

Die Erfindung betrifft weiters ein Verfahren zum energlesparenden Betreiben von Regalbediengeräten in einem Regallagersystem, das einen elektrischen Energieversorgungskreis zur Versorgung der Regalbediengeräte mit elektrischer Energie aufweist, wobei die Regalbediengeräte elektrische Antriebsmotoren zum Ausführen von Bewegungssequenzen, wie z.B. Fahr- und Hubbewegungen, aufweisen und die Antriebsmotoren dazu ausgebildet sind, generatorisch von ihnen erzeugte elektrische Energie in den elektrischen Energieversorgungskreis rückzuspeisen.

Regallagersysteme haben in den letzten Jahren eine solche Größe erreicht, dass mittlerweile oftmals das Problem besteht, die zum Betrieb der Regallagersysteme notwendige elektrische Energie bereitzustellen. Beispielsweise erfordern Regallagersysteme mit 25 Regalgassen oftmals die Bereitstellung einer elektrischen Leistung von 4 MVA und darüber. Da solch hohe elektrischen Leistungen an den Standorten der Regallagersysteme oftmals nicht verfügbar sind, müssen in solchen Fällen die Regallagersysteme unterhalb ihrer theoretisch möglichen Durchsatzleistung betrieben werden, indem beispielsweise nur eine bestimmte Anzahl von Regalbediengeräten zur gleichen Zeit bewegt wird, oder indem die Beschleunigungen der Regalbediengeräte drastisch reduziert werden, um somit eine geringere Stromaufnahme der elektrischen Antriebsmotoren der Regalbediengeräte zu bewirken, wodurch elektrische Lastspitzen vermieden werden. Es ist jedoch sowohl für die Erzeuger von Regallagersystemen als auch für deren Betreiber äußerst unbefriedigend, wenn aufgrund äußerer Umstände die theoretisch mögliche Leistungsfähigkeit der Regallagersysteme nicht ausgeschöpft werden kann. Dies umso mehr, als der Zeitdruck auf die Betreiber der Regallagersysteme aufgrund der mittlerweile allgemein verlangten "Just-in-time"-Lieferungen ständig steigt.

Die DE 198 31 204 A1 offenbart ein elektromotorisch angetriebenes Fahrzeug, wie eine U-. S- oder Straßenbahn, das über ein Fahrstromnetz mit elektrischer Antriebsenergie versorgt wird. Die Bremsenergie eines solchen Fahrzeugs kann bei generatorischem Betrieb der Antriebsmotoren über Stromrichter in das Fahrstromnetz zurückgespeist werden. Es wird allerdings darauf verwiesen, dass eine solche Rückspeisung elektrischer Energie nur dann genutzt werden kann, wenn im selben Streckenabschnitt ein weiteres Fahrzeug vorhanden ist, das gerade anfährt und daher diese Energie verbrauchen kann. Da dies nur bei zufälligem zeitlichen Zusammentreffen der Fall sein kann, müssen die Fahrzeuge mit hochbelastbaren elektrischen Bremswiderständen versehen sein, um Spannungsüberhöhungen zu vermeiden, wodurch aber die elektrische Energie ungenützt in Wärmeenergie umgewandelt wird. Zur Verbesserung solcher Fahrzeuge wird vorgeschlagen, in das Fahrstromnetz Energiespeicher zu schalten, die zumindest einen Teil der beim Anfahren bzw. Beschleunigen der Fahrzeuge benötigen Energie bereitstellen, wobei die Energiespeicher von der Bremsenergie der Fahrzeuge aufgeladen werden. Durch die Natur von U-, S- oder Straßenbahnaystemen bedingt kann nicht ein Fahrzeug in Abhängigkeit von Fahrbedingungen (Bremsen, Beschleunigen) eines anderen Fahrzeugs gesteuert werden.

In der JP 2001/261246 wird vorgeschlagen, eine Stromversorgungseinrichtung eines Fahrstuhls mit einer aufladbaren Batterie zu versehen. Die Batterie wird durch die vom generatorisch betriebenen Aufzugsmotor gelieferte Energie geladen und gibt ihre gespeicherte Energie im Bedarfsfall an den Frequenzumrichter des Aufzugsmotors ab. Diese Lösung zielt darauf ab, den Stromanschlusswert des Fahrstuhls zu senken und damit Siromanschluss-Grundgebühren einzusparen. Es ist darauf hinzuweisen, dass die Energie für den Fahrstuhlbetrieb aus einem Energiespeicher kommt, der genau von jenem Fahrstuhl mit elektrischer Energie versorgt wird, der später wieder Energie entnimmt.

Es besteht daher ein starkes Bedürfnis nach Regallagersystemen sowie Verfahren zum energiesparenden Betreiben von Regalbediengeräten in einem Regallagersystem, bei denen der elektrische Energiebedarf im Vergleich zu bekannten Regallagersystemen und Betriebsverfahren wesentlich reduziert ist.

Die vorliegende Erfindung löst dieses Problem durch Fortbilden des eingangs genannten Regallagersystems gemäß den kennzeichnenden Merkmalen des Anspruches 1 sowie durch Bereitstellen eines Verfahrens zum energiesparenden Betreiben von Regalbediengeräten in einem Regallagersystem mit den Merkmalen des Anspruches 11. Vorteilhafte Ausgestaltungen der Erfindung sind in den abhängigen Ansprüchen dargelegt.

Das erfindungsgemäße Regallagersystem umfasst zumindest zwei Regaleinheiten, wobei jede Regaleinheit ein eigenes verfahrbares Regalbediengerät mit elektrischen Antriebsmotoren aufweist. Ein elektrischer Energieversorgungskreis versorgt die Regaleinheiten mit elektrischer Energie, wobei die Regalbediengeräte dazu ausgebildet sind generatorisch in ihren Antriebsmotoren erzeugte elektrische Energie in den elektrischen Energieversorgungskreis rückzuspeisen und der elektrische Energieversorgungskreis dazu ausgebildet ist von den Regalbediengeräten rückgespeiste elektrische Energie nach Bedarf zwischen den Regaleinheiten zu verteilen. Durch diese erfindungsgemäßen Maßnahmen ist es möglich, eine Energieersparnis von bis zu 20% gegenüber herkömmlichen Regallagersystemen zu erzielen.

Um Regallagergassen von 100 Meter Länge und mehr, in denen sich jeweils ein Regalbediengerät bewegt, realisieren zu können, ist in einer bevorzugten Ausgestaltung der Erfindung vorgesehen, dass die Regalbediengeräte über Stromabnehmer, wie z.B. Schleifschienen, an den elektrischen Energieversorgungskreis angeschlossen sind. Man vermeidet dadurch die mit herkömmlichen Spiralkabeln verbundenen Probleme von Verwicklung und Bruch.

Für größere erfindungsgemäße Regallagersysteme erweist es sich als günstig, wenn zur Erhöhung der Stabilität der elektrischen Energieversorgung der elektrische Energieversorgungskreis einen mit einem Energieversorgungsnetz verbundenen Primärkreis und den Regaleinheiten zugeordnete Zwischenkreise aufweist, wobei zwischen den Primärkreis und die Zwischenkreise elektrische Energiewandler geschaltet sind. Zur Erzielung bestmöglichen Energieausgleichs über das gesamte Regallagersystem können in einer Ausgestaltung der Erfindung elektrische Energiewandler eingesetzt werden, die dazu ausgebildet sind, von den Regalbediengeräten in die Zwischenkreise rückgespeiste elektrische Energie in den Primärkreis rückzukoppeln. Dadurch kann die rückgespeiste Energie unter den Zwischenkreisen verteilt werden. Ergänzend oder alternativ dazu kann ein Zwischenkreis mehrere Regaleinheiten mit elektrischer Energie versorgen und der dem Zwischenkreis zugeordnete elektrische Energiewandler dazu ausgebildet sein, die in den Zwischenkreis rückgespeiste elektrische Energie nach Bedarf unter den an ihn angeschlossenen Regaleinheiten zu verteilen.

In einer besonders vorteilhaften Ausgestaltung des erfindungsgemäßen Regallagersystems ist der Primärkreis ein Wechselstromkreis und sind die Zwischenkreise als Gleichstromkreise ausgebildet, wobei die Energiewandler zwischen Primärkreis und den Zwischenkreisen als AC/DC-Wandler ausgebildet sind. Vorteilhaft sind die Antriebsmotoren der Regalbediengeräte als Gleichstrommotoren mit angeschlossenem Motorregler ausgebildet. Durch diese erfindungsgemäßen Maßnahmen kann gegenüber herkömmlichen Regallagersystemen, die mit Wechselstrom, insbesondere Drehstrom, betrieben werden, eine weitere Einsparung elektrischer Energie erzielt werden, die bis zu 50% betragen kann. Diese Einsparung ist darauf zurückzuführen, dass die Regalbediengeräte durch die Gleichstromtechnik und insbesondere das Zusammenspiel mit elektrischen Gleichstrommotoren mit integrierter Reglereinheit ohne Schaltschrank aufgebaut sein können, was eine Reduzierung der bewegten Masse um 150 bis 200 kg mit sich bringt.

Bei dem erfindungsgemäßen Regallagersystem sind die Regalbediengeräte mit solchen Antriebsmotoren versehen, die bei Bremsvorgängen generatorisch in ihnen erzeugte elektrische Energie in den elektrischen Energieversorgungskreis rückspeisen. Dadurch ist es in weiterer Ausgestaltung der Erfindung möglich, bei den Regalbediengeräten auf elektrische Bremswiderstände zu verzichten, die bei herkömmlichen Regalbediengeräten dazu benutzt werden, die kinetische Bremsenergie als Wärmeenergie abzubauen. Durch die erfindungsgemäße Maßnahme wird eine weitere Verringerung der Masse der Regalbediengeräte erreicht und es bestehen keine Probleme mit der Wärmeabfuhr. Durch den Verzicht auf Bremswiderstände können die Regalbediengeräte auch billiger gebaut werden als herkömmlich.

Um am erfindungsgemäßen Regallagersystem ein elektrisches Lastmanagement betreiben zu können, sind in weiterer Ausgestaltung der Erfindung an den Regalbediengeräten Sensoren zur Ermittlung der elektrischen Strom- oder Leistungsaufnahme oder -abgabe der Antriebsmotoren vorgesehen. Für die Realisierung des Lastmanagement ist es vorteilhaft, wenn ein Steuerrechner vorgesehen ist, der Bewegungssequenzen der Regalbediengeräte so steuert, dass von Regalbediengeräten in den Energieversorgungskreis rückgespeiste elektrische Energie zum Ingangsetzen oder Beschleunigen von Bewegungssequenzen anderer Regalbediengeräte verwendet wird.

Das erfindungsgemäße Verfahren zum energiesparenden Betreiben von Regalbediengeräten in einem Regallagersystem, das einen elektrischen Energieversorgungskreis zur Versorgung der Regalbediengeräte mit elektrischer Energie aufweist, wobei die Regalbediengeräte elektrische Antriebsmotoren zum Ausführen von Bewegungssequenzen, wie z.B. Fahr- und Hubbewegungen, aufweisen und die Antriebsmotoren dazu ausgebildet sind, generatorisch von ihnen erzeugte elektrische Energie in den elektrischen Energieversorgungskreis rückzuspeisen, zeichnet sich dadurch aus, dass die Bewegungssequenzen so gesteuert werden, dass von zumindest einem Antriebsmotor in den Energieversorgungskreis rückgespeiste elektrische Energie zum Ingangsetzen oder Beschleunigen von anderen Antriebsmotoren verwendet wird. Durch dieses Lastmanagementverfahren sind bis zu 20% des Verbrauchs elektrischer Energie im Vergleich zu herkömmlichen Lastmanagementverfahren einsparbar.

Gemäß einer Variante des erfindungsgemäßen Verfahrens wird die von dem zumindest einen Antriebsmotor in den Energieversorgungskreis rückgespeiste elektrische Energie zum Ingangsetzen oder Beschleunigen von anderen Antriebsmotoren desselben Regalbediengerätes verwendet, wobei vorzugsweise die Steuerung der Bewegungssequenz direkt am Regalbediengerät erfolgt. Diese dezentrale Steuerung der Bewegungssequenz direkt am Regalbediengerät entlastet einen übergeordneten zentralen Steuerrechner erheblich. Alternativ dazu kann zugunsten einer möglichst gleichmäßigen Verteilung der rückgespeisten elektrischen Energie über das gesamte Regalsystem eine höhere Belastung eines zentralen Steuerrechners in Kauf genommen werden, indem die von dem zumindest einen Antriebsmotor in den Energieversorgungskreis rückgespeiste elektrische Energie zum Ingangsetzen oder Beschleunigen von Antriebsmotoren anderer Regalbediengeräte unter Steuerung durch den zentralen Steuerrechner verwendet wird. Eine regeltechnisch günstige Variante des erfindungsgemäßen Verfahrens ist dadurch gekennzeichnet, dass die von den Antriebsmotoren in den Energieversorgungskreis rückgespeiste elektrische Energie durch Erfassung von Ist-Stromwerten an den Regalbediengeräten ermittelt wird.

Es erweist sich für eine einfache und stabile Regelung als vorteilhaft, wenn Bewegungsprofile vordefiniert werden, aus denen sich die Bewegungssequenzen der Regalbediengeräte zusammensetzten lassen, wobei die Bewegungsprofile charakteristische Stromverbrauchswerte bzw. Stromabgabewerte der das Bewegungsprofil ausführenden Antriebsmotoren umfassen, und die von den Antriebsmotoren in den Energieversorgungskreis rückgespeiste elektrische Energie aus den vordefinierten Bewegungsprofilen abgeschätzt wird, aus denen die jeweiligen auszuführenden Bewegungssequenzen der Regalbediengeräte zusammengesetzt sind.

Die Erfindung wird nun im Folgenden anhand eines nicht einschränkenden Ausführungsbeispiels unter Bezugnahme auf die Zeichnungen näher erläutert.

In den Zeichnungen zeigen: Fig. 1 eine perspektivische Ansicht eines erfindungsgemäßen Regallagersystems, Fig. 2 einen Aufriss eines erfindungsgemäßen Regalbediengeräts, Fig. 3 eine Vorderansicht von Regalbediengeräten, Fig. 4 ein Schema einer erfindungsgemäßen elektrischen Energieversorgung eines Regallagersystems und Fig. 5 ein Blockschaltbild von elektrischen und elektronischen Komponenten eines erfindungsgemäßen Regallagersystems.

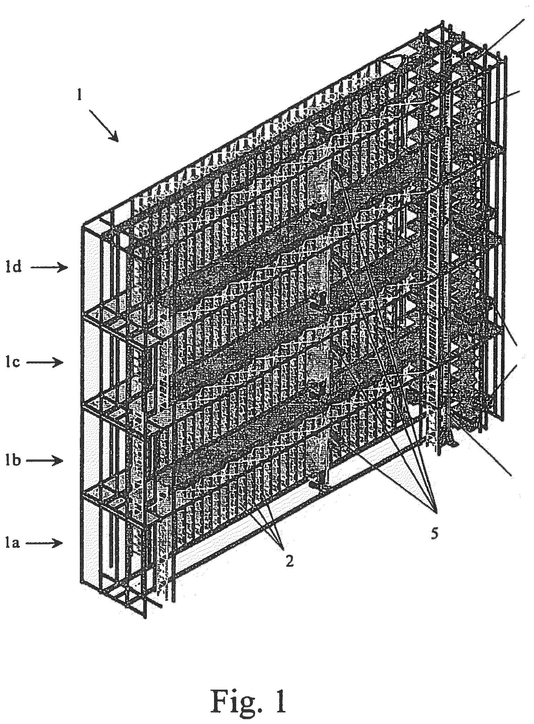

Fig. 1 zeigt ein erfindungsgemäßes Regallagersystem 1 in perspektivischer Ansicht. Das Regallagersystem 1 ist als Hochregallager mit vier übereinander angeordneten Regalgassen 1 a, 1b, 1c, 1d ausgebildet. Eine Vorzone 1e weist ein Liftsystem 3 auf, wodurch für den Zu- und Abtransport von Behältern 4 zu und von den einzelnen Regalgassen 1a - 1d gesorgt wird. Die Vorzone 1 e umfasst Puffermittel 1f zur Zwischenspeicherung von Behältern 4, bis sie an das Liftsystem 3 übergeben oder in über- und nebeneinander angeordnete Regale 2 eingelagert werden können, von denen jeder Regalgasse eine Vielzahl zugeordnet ist. Zur Ein- und Auslagerung der Behälter 4 in die Regale 2 ist in jeder Regalgasse 1a - 1d ein Regalbediengerät 5 vorgesehen, das mechanisch an die zugeordnete Regalgasse gekoppelt ist, so dass es in der Regalgasse verfahrbar ist. Die Regalgassen sind in ihrer Länge nicht speziell eingeschränkt, die jeweilige Auslegung erfolgt durch den Fachmann in Abwägung der vorhandenen Grundfläche und der mit zunehmender Länge anwachsender Fahrzeiten der Regalbediengeräte. Regalgassen von über 100 m (z.B. bis 200 m) können sich als zweckmäßig erweisen. Es sei erwähnt, dass im vorliegenden Ausführungsbeispiel das Regallagersystem 1 zwar als Hochlagersystem ausgeführt ist, dies für die Erfindung aber nicht wesentlich ist. Ebenso können bei dem Regallagersystem die Regalgassen nebeneinander oder sowohl nebeneinander als auch übereinander angeordnet sein. Es versteht sich auch, dass anstelle von Behältern zur Aufbewahrung von Produkten beim erfindungsgemäßen Regallagersystem die zu lagernden Produkte auch direkt in die Regale ein- und ausgelagert werden können.

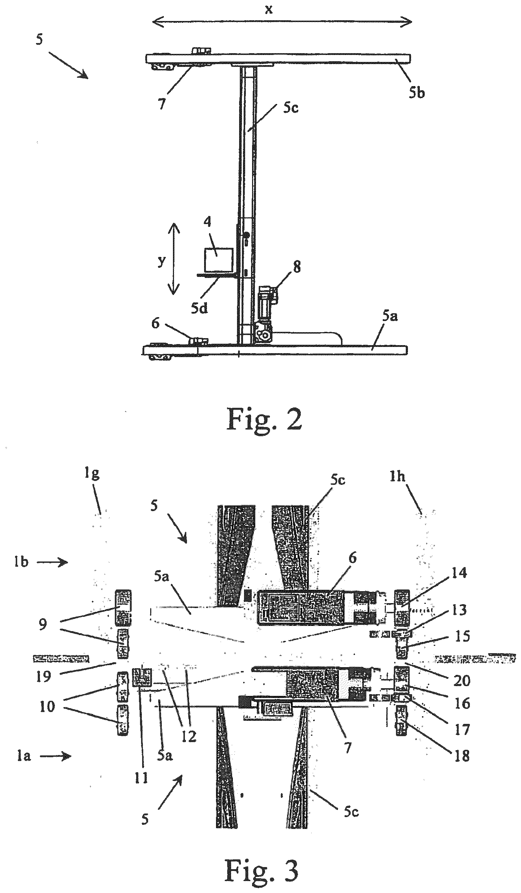

Ein Ausführungsbeispiel eines in der Erfindung verwendeten Regalbediengerätes 5 ist in Fig. 2 in Seitenansicht dargestellt. Das Regalbediengerät 5 weist ein unteres Antriebsmodul 5a und ein oberes Antriebsmodul 5b auf, zwischen denen sich ein Fahrmast 5c erstreckt. Am unteren Antriebsmodul 5a ist ein elektrischer Antriebsmotor 6 befestigt, am oberen Antriebsmodul 5b ist ein weiterer elektrischer Antriebsmotor 7 befestigt. Die beiden Antriebsmotoren sind für das Verfahren des Regalbediengeräts 5 in Richtung des Doppelpfeils x zuständig. Am Fahrmast 5c ist ein weiterer Antriebsmotor 8 befestigt, der für das Heben und Senken (in Richtung des Doppelpfeils y) eines am Fahrmast 5c befestigten Lastaufnehmers 5d sorgt. Auf dem Lastaufnehmer 5d befindet sich ein Behälter 4. Der Lastaufnehmer 5d kann entweder als Greifer oder als Heber ausgebildet sein. Im ersten Fall ergreift und zieht er Behälter 4 aus den Regalen (in einer Richtung aus der Zeichnungsebene heraus) bzw. schiebt Behälter 4 in Regale, im zweiten Fall weist er einen nicht dargestellten Ausleger auf, der in Regalen abgestellte Behälter unterfährt, anhebt und durch Einfahren des Auslegers herauszieht bzw. durch den umgekehrten Bewegungsablauf in Regalen abstellt. Das Regalbediengerät 5 kann somit Behälter 4 bzw. zu lagernde Produkte in drei zueinander orthogonalen Richtungen bewegen. Die elektrischen Antriebsmotoren 6, 7, 8 sind als Gleichstrom-Positionsmotoren ausgebildet, die über integrierte Regelungseinheiten verfügen, so dass am Regalbediengerät 5 kein Schaltschrank vorgesehen werden muss, was für eine beträchtliche Gewichtsersparnis sorgt.

In Fig. 3 ist eine Vorderansicht eines Ausschnittes des erfindungsgemäßen Regallagersystems zu sehen, wobei ein oberer Abschnitt der Regalgassen 1a und ein unterer Abschnitt der Regalgasse 1b dargestellt sind. Man erkennt in Rahmenteilen 1g, 1h angeordnete Führungsschienen 19, 20, in denen die zwei Regalbediengeräte 5 der Regalgassen 1a, 1b verfahrbahr sind. Von dem Regalbediengerät 5 der Regalgasse 1b sind das untere Antriebsmodul 5a und ein Abschnitt des Fahrmastes 5c zu sehen. Das untere Antriebsmodul 5a des Regalbediengeräts 5 der Regalgasse 1b weist an der linken Seite zwei Führungsräder 9 auf, die entlang der Führungsschiene 19 laufen; an der rechten Seite ist ebenfalls ein Führungsradpaar 13 vorgesehen, das in der Führungsschiene 20 läuft. Weiters ist am Antriebsmodul 5a der untere Antriebsmotor 6 befestigt, der ein Reibrad 14 treibt, das zusammen mit einem Gegen-Reibrad 15 für eine schlupffreie Bewegung des Antriebsmoduls 5a entlang der Führungsschiene 20 sorgt. Von dem Regalbediengerät 5 der Regalgasse 1a sind das obere Antriebsmodul 5b und ein Ausschnitt des Fahrmastes 5c dargestellt. An der linken Seite des Antriebsmoduls 5b sind zwei Führungsräder 10 vorgesehen, die entlang der Führungsschiene 19 laufen; an der rechten Seite des Antriebsmoduls 5b ist ein Führungsradpaar 17 vorgesehen, das in der Führungsschiene 20 läuft. Der am oberen Antriebsmodul 5b befestigte obere Antriebsmotor 7 treibt ein Reibrad 16, das zusammen mit einem Gegen-Reibrad 18 für eine schlupffreie Bewegung des Antriebsmoduls 5b entlang der Führungsschiene 20 sorgt. Weiters sind in Fig. 3 ein Wegmesser 11 und eine Stromschiene 12 der Regalgasse 1a dargestellt. Der Wegmesser gibt die aktuelle, absolute oder relative Position des Regalbediengeräts 5 in x-Richtung an. Die Stromschiene 12 versorgt das Regalbediengerät 5 mit elektrischer Energie und nimmt von dem Antriebsmotor 7 bzw. den nicht dargestellten anderen Antriebsmotoren des Regalbediengeräts generatorisch erzeugte elektrische Energie auf.

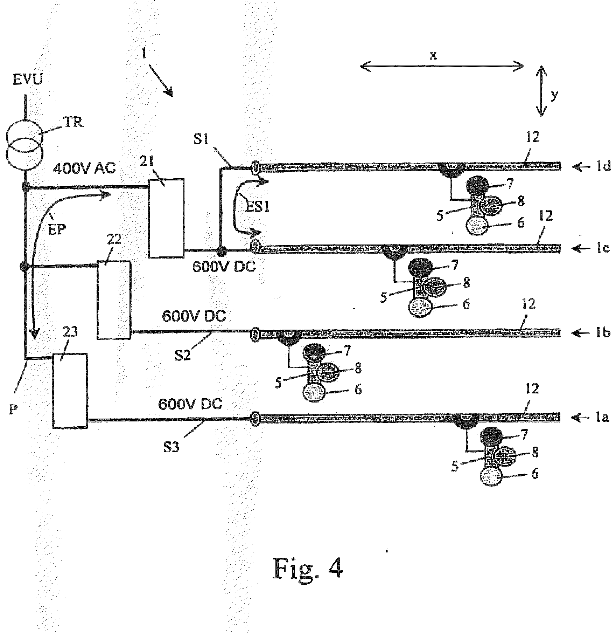

In Fig. 4 ist ein Schema der elektrischen Energieversorgung des erfindungsgemäßen Regallagersystems 1 dargestellt. Dem Regallagersystem 1 wird von einem Energieversorgungsunternehmen EVU bereitgestellte elektrische Wechselspannung der erforderlichen Leistung zugeführt, die in einem Transformator TR auf eine geeignete Spannung transformiert wird, z.B. 400V AC. Die transformierte Wechselspannung wird in einen Primärkreis P des elektrischen Energieversorgungskreises des Regallagersystems eingespeist. Am Primärkreis P des elektrischen Energieversorgungskreises hängen Energiewandler 21, 22, 23, die als AC/DC-Wandler ausgebildet sind und die ihnen zugeführte Wechselspannung in eine Gleichspannung von 600 V DC umwandeln. Die Ausgangsanschlüsse der Energiewandler 21, 22, 23 sind jeweils mit einem elektrischen Zwischenkreis S1, S2, S3 verbunden, wobei die Zwischenkreise S2 und S3 jeweils eine Stromschiene 12 einer Regalgasse 1a bzw. 1b mit elektrischer Energie versorgen und der Zwischenkreis S1 zwei Stromschienen 12, d.h. die zwei Regalgassen 1c und 1d mit elektrischer Energie versorgt. Mit den Stromschienen 12 jeder Regalgasse ist über Schleifer jeweils ein verfahrbares Regalbediengerät 5 verbunden, das über Gleichstrom-Antriebsmotoren 6, 7 zur horizontalen Bewegung des Regalbediengerätes in x-Richtung verfahrbar ist. Ein weiterer Gleichstrommotor 8 ist zur Hubbewegung eines Lastaufnehmers in y-Richtung vorgesehen. Alle Gleichstrommotoren 6, 7, 8 sind solcherart ausgebildet, dass sie bei Brems- bzw. Verzögerungsbewegungen die im Motor generatorisch erzeugte elektrische Energie (= Bremsenergie) in den zugeordneten Zwischenkreis S1, S2, S3 rückspeisen. Der elektrische Zwischenkreis S1 ist dabei so ausgelegt, dass von einem Regalbediengerät einer Regalgasse 1c oder 1d über die Stromschiene 12 rückgespeiste Energie der anderen Regalgasse 1d oder 1c nach Bedarf zur Verfügung gestellt wird (Doppelpfeil ES1).

Weiters sind die Energiewandler 21, 22, 23 so ausgebildet, dass sie von den Antriebsmotoren 6, 7, 8 der Regalbediengeräte 5 in die Zwischenkreise S1, S2, S3 zurückgespeist elektrische Energie, die aktuell in den jeweiligen Zwischenkreisen nicht benötigt wird, in den Primärkreis P zurückspeisen, wo sie nach Bedarf zwischen den Energiewandlern 21, 22, 23 verteilt wird (Doppelpfeil EP).

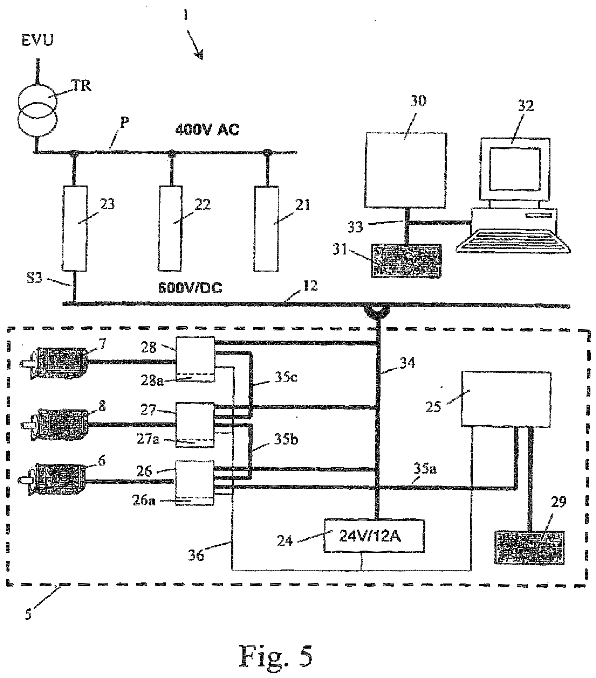

Für die folgende Beschreibung wird nun auch auf Fig. 5 Bezug genommen, die ein Blockschaltbild von elektrischen und elektronischen Komponenten des Regallagersystems 1 und insbesondere eines Regalbediengeräts 5 darstellt. Die elektrischen Antriebsmotoren 6, 7, 8 sind als Positionsmotoren ausgebildet, das sind Gleichstrommotoren mit integrierten oder nahe den Motoren im Regalbediengerät 5 angeordneten Motorreglern 27, 28, 29. Durch das Vorsehen der Positionsmotoren kann an den Regalbediengeräten 5 auf Schaltschränke verzichtet werden, was eine beträchtliche Reduzierung der Masse von bis zu 200 kg und eine damit einhergehende entsprechende Reduzierung der erforderlichen Antriebsenergie mit sich bringt. Da die Antriebsmotoren 6, 7, 8 und die elektrische Energieversorgung des Regallagersystems erfindungsgemäß so ausgebildet sind, dass in den Motoren beim Bremsen generatorisch erzeugte elektrische Energie in den Energieversorgungskreis zurückgespeist wird, kann im Gegensatz zu herkömmlichen Regallagersystemen bei den erfindungsgemäßen Regalbediengeräten auf elektrische Bremswiderstände verzichtet werden, welche bei herkömmlichen Regalbediengeräten zur Umwandlung der elektrischen Bremsenergie in Wärme vorgesehen sind. Durch diese erfindungsgemäße Maßnahme wird einerseits die Masse der Regalbediengeräte weiter reduziert, und man vermeidet Probleme mit der nötigen Abfuhr der durch Bremswiderstände erzeugten Wärmeenergie. Die Motorregler 27, 28, 29 sind mit Sensoren 27a, 28a, 29a zur Ermittlung der elektrischen Strom- oder Leistungsaufnahme oder -abgabe der Antriebsmotoren vorgesehen sind.

Zweckmäßig erfolgt die Verteilung der von den Motoren 6, 7, 8 eines Regalbediengerätes generatorisch erzeugten elektrischen Energie zunächst unter den anderen Motoren 7, 8, 6 dieses einen Regalbediengerätes, z.B. indem die Bremsenergie der für die Bewegung des Regalbediengerätes 5 in x-Richtung zuständigen Motoren 6, 7 zum Ingangsetzen des Motors 8 genutzt wird, der für die Hubbewegung des Lastaufnehmers zuständig ist. In dem Regalbediengerät 5 nicht verbrauchte elektrische Energie wird weiter an den Zwischenkreis rückgespeist und - soweit mehrere Zwischenkreise miteinander verbunden sind - unter den Zwischenkreisen aufgeteilt. Soweit die elektrische Energie nicht in den Zwischenkreisen verteilt werden kann, wird sie von den Energiewandlern in den Primärkreis P rückgespeist und hier verteilt.

Die Motorregler 27, 28, 29, sind über einen industriellen Datenbus 35a, 35b, 35c, wie z.B. PROFIBUS®, miteinander und mit einer am Regalbediengerät 5 angeordneten speicherprogrammierbaren Steuerung 25 verbunden. Die Steuerung 25 sorgt dafür, die von zumindest einem Antriebsmotor des Regalbediengerätes 5 generatorisch erzeugte Energie den anderen Antriebsmotoren des Regalbediengerätes zur Verfügung zu stellen, indem entsprechende Bewegungssequenzen dieser Motoren initiiert werden.

Die Motorregler 27, 28, 29 und die speicherprogrammierbare Steuerung 25 werden über Kabel 36 mit 24 V DC versorgt, wobei diese Spannung von einem Spannungswandlermodul 24 geliefert wird, dessen Eingang mit der Stromschiene 12 des Zwischenkreises S3 verbunden ist. Die Motoren 6, 7, 8 wiederum werden über die Motorregler 27, 28, 29 von der Stromschiene 12 mit 600 V DC versorgt.

Die speicherprogrammierbare Steuerung 25 ist über drahtlose (z.B. optische oder Funk-) Datenkoppler 29, 31 mit einer übergeordneten speicherprogrammierbaren Steuerung 30 und mit einem zentralen Steuerrechner 32 verbunden, wobei der Datenkoppler 31, die Steuerung 30 und der zentrale Steuerrechner 32 ebenfalls über einen industriellen Datenbus 33, wie z.B. PROFIBUS®, miteinander verbunden sind. Durch die Vernetzung aller Steuergeräte des Regallagersystems können die Bewegungen aller Regalbediengeräte von der übergeordneten speicherprogrammierbaren Steuerung 30 zentral koordiniert und überwacht werden, wozu beispielsweise auch Aufgaben wie das Ermitteln der von den Antriebsmotoren der Regalbediengeräte in den Energieversorgungskreis rückgespeisten elektrischen Energie durch Erfassung von Ist-Stromwerten an den Regalbediengeräten zählen.

Die übergeordnete speicherprogrammierbare Steuerung 30 oder der zentrale Steuerrechner 32 sind auch dafür vorgesehen, ein Programm ablaufen zu lassen, das für einen energiesparenden Betrieb des erfindungsgemäßen Regallagersystems 1 sorgt. Solche Programme sind an sich unter dem Begriff "elektrisches Lastmanagement" bekannt und steuern den Betrieb der Regalbediengeräte so, dass die von ihnen aufgenommene elektrische Leistung unterhalb einer für das gesamte Regallagersystem zur Verfügung stehenden Nennleistung bleibt, beispielsweise indem die Anzahl der gleichzeitig bewegten Regalbediengeräte limitiert wird oder indem Beschleunigungen der Regalbediengeräte reduziert werden. Erfindungsgemäß wird ein elektrisches Lastmanagement jedoch dadurch realisiert, indem bei der Steuerung der Bewegungssequenzen der Regalbediengeräte die von Regalbediengeräten in den Energieversorgungskreis rückgespeiste elektrische Energie berücksichtigt wird, wobei die rückgespeiste Energie dazu ausgenutzt wird, Regalbediengeräte in Gang zu setzen oder ihre Bewegung zu beschleunigen.

In einer bevorzugten Ausgestaltung des erfindungsgemäßen elektrischen Lastmanagement-Verfahrens werden Bewegungsprofile vordefiniert, aus denen die Bewegungssequenzen der Regalbediengeräte zusammengesetzt werden. Diese Bewegungsprofile umfassen charakteristische Stromverbrauchswerte bzw. Stromabgabewerte der das Bewegungsprofil ausführenden Antriebsmotoren. Die von den Antriebsmotoren in den Energieversorgungskreis rückgespeiste elektrische Energie lässt sich daher aus den vordefinierten Bewegungsprofilen, aus denen die jeweiligen auszuführenden Bewegungssequenzen der Regalbediengeräte zusammengesetzt sind, abschätzen.

Die Vorteile und Vorzüge der vorliegenden Erfindung lassen sich folgendermaßen zusammenfassen:
- Geringerer Energieverbrauch durch regalgassenübergreifende Nutzung generatorisch erzeugter Energie.
- Durch das Zusammenspiel von Gleichstromversorgung der Zwischenkreise mit dem dezentralen Positionsmotor-Antriebssystem (Antriebe mit integrierter Reglereinheit) ist ein nahezu schaltschrankloser Aufbau der Regalbediengeräte möglich.
- Gewichtsersparnis und dadurch Ersparnis der zu bewegenden Massen (Energieersparnis) durch den nahezu schaltschrank losen Aufbau.
- Durch Rückeinspeisung der generatorisch erzeugten Energie über die Stromabnehmer in den Zwischenkreis sind keine Bremswiderstände am Regalbediengerät nötig. Nachteil der Bremswiderstände sind Kosten, Platzbedarf und Probleme mit der Abfuhr der erzeugten Wärme.

## Patentansprüche

1. Regallagersystem (1) mit zumindest zwei Regaleinheiten (1a - 1d), wobei jede Regaleinheit ein eigenes verfahrbares Regalbediengerät (5) mit elektrischen Antriebsmotoren (6, 7, 8) aufweist, und mit einem elektrischen Energieversorgungskreis (P, S1, S2, S3), um die Regaleinheiten (1a - 1d) mit elektrischer Energie zu versorgen, **dadurch gekennzeichnet, dass** die Regalbediengeräte (5) über Stromabnehmer, wie z.B. Stromschienen (12), an den elektrischen Energieversorgungskreis (S1, S2, S3) angeschlossen sind und über die Stromabnehmer generatorisch in ihren Antriebsmotoren (6, 7, 8) erzeugte elektrische Energie in den elektrischen Energieversorgungskreis rückspeisen, wobei der elektrische Energieversorgungskreis die von den Regalbediengeräten rückgespeiste elektrische Energie an andere Regalbediengeräte (5) in den Regaleinheiten verteilt (Pfeil ES1, Pfeil EP).

2. Regallagersystem nach Anspruch 1, **dadurch gekennzeichnet, dass** der elektrische Energieversorgungskreis einen mit einem Energieversorgungsnetz (EVU) verbundenen Primärkreis (P), und den Regaleinheiten (1a, 1b, 1c, 1d) zugeordnete Zwischenkreise (S1, S2, S3) aufweist, wobei zwischen den Primärkreis und die Zwischenkreise elektrische Energiewandler (21, 22, 23) geschaltet sind.

3. Regallagersystem nach Anspruch 2, **dadurch gekennzeichnet, dass** die elektrischen Energiewandler (21, 22, 23) dazu ausgebildet sind, von den Regalbediengeräten (5) in die Zwischenkreise rückgespeiste elektrische Energie in den Primärkreis (P) rückzukoppeln.

4. Regallagersystem nach Anspruch 2 oder 3, **dadurch gekennzeichnet, dass** ein Zwischenkreis (S1) mehrere Regaleinheiten (1c, 1d) mit elektrischer Energie versorgt und der dem Zwischenkreis (S1) zugeordnete elektrische Energiewandler (21) dazu ausgebildet ist, die in den Zwischenkreis (S1) rückgespeiste elektrische Energie nach Bedarf unter den an ihn angeschlossenen Regaleinheiten (1c, 1d) zu verteilen.

5. Regallagersystem nach einem der Ansprüche 2 bis 4, **dadurch gekennzeichnet, dass** der Primärkreis (P) ein Wechselstromkreis ist, die Zwischenkreise (S1, S2, S3) Gleichstromkreise sind und die Energiewandler (21, 22, 23) als AC/DC-Wandler ausgebildet sind.

6. Regallagersystem nach Anspruch 5, **dadurch gekennzeichnet, dass** die Antriebsmotoren (6, 7, 8) der Regalbediengeräte (5) als Gleichstrommotoren mit angeschlossenem Motorregler (26, 27, 28) ausgebildet sind.

7. Regallagersystem nach einem der vorhergehenden Ansprüche, **dadurch gekennzeichnet, dass** die Regalbediengeräte (5) ohne elektrische Bremswiderstände ausgebildet sind.

8. Regallagersystem nach einem der vorhergehenden Ansprüche, **dadurch gekennzeichnet, dass** an den Regalbediengeräten (5) Sensoren (26a, 27a, 28a) zur Ermittlung der elektrischen Strom- oder Leistungsaufnahme oder -abgabe der Antriebsmotoren vorgesehen sind.

9. Regallagersystem nach einem der vorhergehenden Ansprüche, **dadurch gekennzeichnet, dass** ein Steuerrechner (30, 32) vorgesehen ist, der dazu ausgebildet ist, Bewegungssequenzen der Regalbediengeräte so zu steuern, dass von Regalbediengeräten in den Energieversorgungskreis rückgespeiste elektrische Energie zum Ingangsetzen oder Beschleunigen von Bewegungssequenzen der Regalbediengeräte verwendet wird.

10. Verfahren zum energiesparenden Betreiben von Regalbediengeräten (5) in einem Regallagersystem (1), das einen elektrischen Energieversorgungskreis zur Versorgung der Regalbediengeräte mit elektrischer Energie aufweist, wobei die Regalbediengeräte elektrische Antriebsmotoren (6, 7, 8) zum Ausführen von Bewegungssequenzen, wie z.B. Fahr- und Hubbewegungen, aufweisen und die Antriebsmotoren dazu ausgebildet sind, generatorisch von ihnen erzeugte elektrische Energie in den elektrischen Energieversorgungskreis rückzuspeisen, **dadurch gekennzeichnet, dass** die Bewegungssequenzen so gesteuert werden, dass von zumindest einem Antriebsmotor (6, 7, 8) in den Energieversorgungskreis rückgespeiste elektrische Energie zum Ingangsetzen oder Beschleunigen von anderen Antriebsmotoren (7, 8, 6) verwendet wird.

11. Verfahren nach Anspruch 10, **dadurch gekennzeichnet, dass** die von dem zumindest einen Antriebsmotor (6, 7, 8) in den Energieversorgungskreis rückgespeiste elektrische Energie zum Ingangsetzen oder Beschleunigen von anderen Antriebsmotoren (7, 8, 6) desselben Regalbediengerätes (5) verwendet wird, wobei vorzugsweise die Steuerung der Bewegungssequenz direkt am Regalbediengerät erfolgt.

12. Verfahren nach Anspruch 10, **dadurch gekennzeichnet, dass** die von dem zumindest einen Antriebsmotor (7, 8, 6) in den Energieversorgungskreis rückgespeiste elektrische Energie zum Ingangsetzen oder Beschleunigen von Antriebsmotoren anderer Regalbediengeräte (5) unter Steuerung durch zentrale Steuerrechner (30, 32) verwendet wird.

13. Verfahren nach einem der Ansprüche 10 bis 12, **dadurch gekennzeichnet, dass** die von den Antriebsmotoren (6, 7, 8) in den Energieversorgungskreis rückgespeiste elektrische Energie durch Erfassung von Ist-Stromwerten an den Regalbediengeräten ermittelt wird.

14. Verfahren nach einem der Ansprüche 10 bis 12, **gekennzeichnet durch** das Vordefinieren von Bewegungsprofilen, aus denen die Bewegungssequenzen der Regalbediengeräte (5) zusammengesetzt sein können, wobei die Bewegungsprofile charakteristische Stromverbrauchswerte bzw. Stromabgabewerte der das Bewegungsprofil ausführenden Antriebsmotoren (6, 7, 8) umfassen, und durch das Abschätzen der von den Antriebsmotoren in den Energieversorgungskreis rückgespeisten elektrischen Energie aus den vordefinierten Bewegungsprofilen, aus denen die jeweiligen auszuführenden Bewegungssequenzen der Regalbediengeräte zusammengesetzt sind.

## Claims

1. A shelf storage system (1) comprising at least two shelf units (1a - 1d), wherein each shelf unit has a separate moveable shelf feeder device (5) with electric drive motors (6, 7, 8), and comprising an electric energy supply circuit (P, S1, S2, S3) for supplying the shelf units (1a - 1d) with electric energy, **characterized in that** the shelf feeder devices (5) are connected to the electric energy supply circuit (S1, S2, S3) via collectors such as, e.g., conductor rails (12) and, via the collectors, recycle electric energy produced in their drive motors (6, 7, 8) by being operated as generators back into the electric energy supply circuit, with the electric energy supply circuit distributing electric energy recycled by the shelf feeder devices to other shelf feeder devices (5) in the shelf units (arrow ES1, arrow EP).

2. A shelf storage system according to claim 1, **characterized in that** the electric energy supply circuit comprises a primary circuit (P) connected to an energy supply network (EVU) and intermediate circuits (S1, S2, S3) allocated to the shelf units (1a, 1b, 1c, 1d), with electric energy converters (21, 22, 23) being interposed between the primary circuit and the intermediate circuits.

3. A shelf storage system according to claim 2, **characterized in that** the electric energy converters (21, 22, 23) are designed for recycling electric energy back into the primary circuit (P), which electric energy has been fed back into the intermediate circuits by the shelf feeder devices (5).

4. A shelf storage system according to claim 2 or 3, **characterized in that** one intermediate circuit (S1) supplies several shelf units (1c, 1d) with electric energy and the electric energy converter (21) associated to the intermediate circuit (S1) is designed for distributing the electric energy fed back into the intermediate circuit (S1) among the shelf units (1c, 1d) connected to the same, according to requirements.

5. A shelf storage system according to any of claims 2 to 4, **characterized in that** the primary circuit (P) is an alternating current circuit, the intermediate circuits (S1, S2, S3) are direct current circuits and the energy converters (21, 22, 23) are designed as AC/DC converters.

6. A shelf storage system according to claim 5, **characterized in that** the drive motors (6, 7, 8) of the shelf feeder devices (5) are designed as direct current motors with an attached motor controller (26, 27, 28).

7. A shelf storage system according to any of the preceding claims, **characterized in that** the shelf feeder devices (5) are designed without electric braking resistors.

8. A shelf storage system according to any of the preceding claims, **characterized in that** the shelf feeder devices (5) are provided with sensors (26a, 27a, 28a) for detecting the electric current or power consumption or delivery of the drive motors.

9. A shelf storage system according to any of the preceding claims, **characterized in that** a control computer (30, 32) is provided which is designed for controlling motion sequences of the shelf feeder devices such that electric energy fed back into the energy supply circuit by shelf feeder devices is used for activating or accelerating motion sequences of the shelf feeder devices.

10. A process for the energy-saving operation of shelf feeder devices (5) in a shelf storage system (1) which has an electric energy supply circuit for supplying the shelf feeder devices with electric energy, wherein the shelf feeder devices have electric drive motors (6, 7, 8) for performing motion sequences such as, e.g., driving and lifting motions and the drive motors are designed for recycling electric energy produced by them by being operated as generators back into the electric energy supply circuit, **characterized in that** the motion sequences are controlled such that electric energy fed back into the energy supply circuit by at least one drive motor (6, 7, 8) is used for activating or accelerating other drive motors (7, 8, 6).

11. A process according to claim 10, **characterized in that** the electric energy fed back into the energy supply circuit by the at least one drive motor (6, 7, 8) is used for activating or accelerating other drive motors (7, 8, 6) of the same shelf feeder device (5), with the control of the motion sequence preferably occurring directly at the shelf feeder device.

12. A process according to claim 10, **characterized in that** the electric energy fed back into the energy supply circuit by the at least one drive motor (7, 8, 6) is used for activating or accelerating drive motors of other shelf feeder devices (5), with central control computers (30, 32) exerting control.

13. A process according to any of claims 10 to 12, **characterized in that** the electric energy fed back into the energy supply circuit by the drive motors (6, 7, 8) is ascertained by determining actual current values at the shelf feeder devices.

14. A process according to any of claims 10 to 12, **characterized by** predefining motion profiles from which the motion sequences of the shelf feeder devices (5) can be assembled, with the motion profiles comprising characteristic current consumption values and current delivery values, respectively, of the drive motors (6, 7, 8) performing the motion profile, and by evaluating the electric energy fed back into the energy supply circuit by the drive motors from the predefined motion profiles from which the respective motion sequences of the shelf feeder devices which are to be performed are assembled.

## Revendications

1. Système de stockage à rayonnages (1) comprenant au moins deux unités de rayonnages (1a-1d), dans lequel chaque unité de rayonnages comprend un propre appareil de desserte de rayonnages déplaçable (5) avec des moteurs d'entraînement électrique (6, 7, 8), et comprenant un circuit d'alimentation en énergie électrique (P, S1, S2, S3), afin d'alimenter les unités de rayonnages (1a-1d) en énergie électrique, **caractérisé en ce que** les appareils de desserte de rayonnages (5) sont branchés au circuit d'alimentation en énergie électrique (S1, S2, S3) via
des capteurs de courant, comme des rails de courant (12), et les
capteurs de courant réalimentent dans le circuit d'alimentation en énergie électrique l'énergie électrique générée dans leurs moteurs d'entraînement (6, 7, 8) fonctionnant en générateur, le circuit d'alimentation en énergie électrique répartissant l'énergie électrique réalimentée par les appareils de desserte de rayonnages à d'autres appareils de desserte de rayonnages (5) dans les unités de rayonnages (flèche ES1, flèche EP).

2. Système de stockage à rayonnages selon la revendication 1, **caractérisé en ce que** le circuit d'alimentation en énergie électrique comprend un circuit primaire (P) raccordé à un réseau d'alimentation en énergie (EVU), et des circuits intermédiaires (S1, S2, S3) associés aux unités à rayonnages (1a, 1b, 1e, 1d), des convertisseurs d'énergie électrique (21, 22, 23) étant branchés entre le circuit primaire et les circuits secondaires.

3. Système de stockage à rayonnages selon la revendication 2, **caractérisé en ce que** les convertisseurs d'énergie électrique (21, 22, 23) sont réalisés pour réinjecter dans le circuit primaire (P) l'énergie électrique réalimentée depuis les appareils de desserte de rayonnages (5) vers les circuits intermédiaires.

4. Système de stockage à rayonnages selon la revendication 2 ou 3, **caractérisé en ce qu'**un circuit intermédiaire (S1) alimente en énergie électrique plusieurs unités de rayonnages (1c, 1d), et le convertisseur d'énergie électrique (21) associé au circuit intermédiaire (S1) est réalisé afin de répartir l'énergie électrique réalimentée dans le circuit intermédiaire (S1) selon les besoins entre les unités de rayonnages (1c, 1d) qui lui sont raccordées.

5. Système de stockage à rayonnages selon l'une des revendications 2 à 4, **caractérisé en ce que** le circuit primaire (P) est un circuit à courant alternatif, les circuits intermédiaires (S1, S2, S3) sont des circuits à courant continu, et les convertisseurs d'énergie (21, 22, 23) sont réalisés sous forme de convertisseurs alternatif/continu (AC/DC).

6. Système de stockage à rayonnages selon la revendication 5, **caractérisé en ce que** les moteurs d'entraînement (6, 7, 8) des appareils de desserte de rayonnages (5) sont réalisés sous forme de moteurs à courant continu avec régulateur raccordé (26, 27, 28).

7. Système de stockage à rayonnages selon l'une des revendications précédentes, **caractérisé en ce que** les appareils de desserte de rayonnages (5) sont réalisés sans résistance de freinage électrique.

8. Système de stockage à rayonnages selon l'une des revendications précédentes, **caractérisé en ce que** des capteurs (26a, 27a, 28a) sont prévus sur les appareils de desserte de rayonnages (5) pour déterminer l'intensité ou la puissance électrique absorbée ou fournie par les moteurs d'entraînement.

9. Système de stockage à rayonnages selon l'une des revendications précédentes, **caractérisé en ce qu'**il est prévu un calculateur de commande (30, 32) qui est réalisé pour commander les séquences de déplacement des appareils de desserte de rayonnages de telle façon que l'énergie électrique réalimentée par les appareils de desserte de rayonnages vers le circuit d'alimentation en énergie est utilisée pour mettre en marche ou accélérer les séquences de déplacement des appareils de desserte de rayonnages.

10. Procédé pour économiser l'énergie dans le fonctionnement d'appareils de desserte de rayonnages (5) dans un système de stockage à rayonnages (1) qui comprend un circuit d'alimentation en énergie électrique pour l'alimentation des appareils de desserte de rayonnages en énergie électrique, dans lequel les appareils de desserte de rayonnages comprennent des moteurs d'entraînement électriques (6, 7, 8) pour exécuter des séquences de déplacement, comme par exemple des déplacements de translation et des déplacements de levage, et les moteurs d'entraînement sont réalisés de manière à réalimenter, lorsqu'ils fonctionnent en générateur, l'énergie électrique qu'ils produisent vers le circuit d'alimentation en énergie électrique, **caractérisé en ce que** les séquences de déplacement sont commandées de telle façon que l'énergie électrique réalimentée par au moins un moteur d'entraînement (6, 7, 8) dans le circuit d'alimentation en énergie est utilisée pour mettre en marche ou pour accélérer d'autres moteurs d'entraînement (7, 8, 6).

11. Procédé selon la revendication 10, **caractérisé en ce que** l'énergie électrique réalimentée dans le circuit d'alimentation en énergie depuis ledit au moins un moteur d'entraînement (6, 7, 8) est utilisée pour mettre en marche ou pour accélérer d'autres moteurs d'entraînement (7, 8, 6) du même appareil de desserte de rayonnages (5), et la commande de la séquence de déplacement a de préférence lieu directement au niveau de l'appareil de desserte de rayonnages.

12. Procédé selon la revendication 10, **caractérisé en ce que** l'énergie électrique réalimentée dans le circuit d'alimentation en énergie depuis ledit au moins un moteur d'entraînement (7, 8, 6) est utilisée pour mettre en marche ou pour accélérer des moteurs d'entraînement d'autres appareils de desserte de rayonnages (5) sous la commande de calculateurs de commande centralisés (30, 32).

13. Procédé selon l'une des revendications 10 à 12, **caractérisé en ce que** l'énergie électrique réalimentée dans le circuit d'alimentation en énergie depuis les moteurs d'entraînement (6, 7, 8) est déterminée par détection de valeurs de courant réelles au niveau des appareils de desserte de rayonnages.

14. Procédé selon l'une des revendications 10 à 12, **caractérisé en ce que** l'on définit préalablement des profils de déplacement à partir desquels les séquences de déplacement des appareils de desserte de rayonnages (5) peuvent être composées, les profils de déplacement comprenant des valeurs de consommation électrique ou des valeurs d'absorption de courant caractéristiques des moteurs d'entraînement (6, 7, 8) qui exécutent le profil de déplacement, et **en ce que** l'on estime l'énergie électrique réalimentée par les moteurs d'entraînement dans le circuit d'alimentation en énergie à partir des profils de déplacement préalablement définis, à partir desquels les séquences de déplacement respectivement à exécuter par les appareils de desserte de rayonnages sont composées.
